# DEMANDE DE BREVET EUROPEEN

(11) **EP 0 750 127 A1**
(43) Date de publication de la demande: **27.12.1996**
(21) Numéro de dépôt: 96401371.8
(22) Date de dépôt: 21.06.1996
(51) Int. Cl.: F16D 25/08, F16D 25/12, F15B 15/08

(54) **Vérin de commande d'embrayage de véhicule automobile à piston fixe et corps de cylindre mobile**

(30) Priorité: 22.06.1995 FR 9507629
(71) Demandeur: VALEO, 75017 Paris (FR)
(72) Inventeur: Rey, Frédéric, 38150 Roussillon (FR)
(74) Mandataire: Gamonal, Didier

(57) **Abrégé**

Un vérin hydraulique de commande d'un embrayage de véhicule automobile destiné à agir sur une fourchette articulée d'embrayage par l'intermédiaire d'un organe de traction (54), comporte un piston fixe (12) relié au châssis (16) du véhicule, ou au groupe motopropulseur, et un corps de cylindre mobile (14) auquel est relié I'organe de traction (54), du type dans lequel corps de cylindre (14) et la fourchette sont agencés axialement respectivement en arrière et en avant du piston (12), dans lequel le cylindre (14) comporte deux ailes radiales (52) auxquelles sont accrochées les deux extrémités (62) d'un câble de traction (54) qui est replié en forme de U autour d'un étrier (58) relié à la fourchette.

## Description

L'invention concerne un vérin hydraulique de commande d'embrayage de véhicule automobile, destiné à agir sur une fourchette articulée d'embrayage par l'intermédiaire d'un organe de traction, du type dans lequel le vérin comporte un élément fixe relié au châssis du véhicule, ou au groupe motopropulseur de celui-ci, et un élément mobile auquel est relié l'organe de traction, et du type dans lequel l'élément mobile et la fourchette sont agencés axialement respectivement en arrière et en avant de l'élément fixe, le vérin étant du type comportant un corps de cylindre et un piston susceptibles de coulisser relativement l'un par rapport à l'autre selon leur axe commun.

On connaît des modes de réalisation d'un tel type de vérin dans lequel le corps de cylindre est fixe et le piston mobile.

L'organe de traction est alors accroché à l'arrière du piston et traverse axialement le piston et le corps de cylindre pour commander la fourchette d'embrayage située à l'avant du vérin.

Une telle conception présente l'inconvénient de diminuer la section utile de la chambre hydraulique du vérin puisqu'elle est traversée axialement par l'élément de traction et, pour obtenir une force déterminée de débrayage, il est nécessaire d'augmenter l'encombrement radial du vérin.

Cette conception présente en outre l'inconvénient de nécessiter de multiples étanchéités entre le piston, le vérin et l'organe de traction.

Pour apporter une solution à ces inconvénients, il a été proposé, dans le document FR-A-2.680.555, d'agencer l'organe de traction à l'extérieur du vérin.

Ainsi, dans ce document, il est proposé un cadre rectangulaire rigide qui est fixé par une première extrémité axiale à l'arrière du piston mobile, qui chevauche le corps de cylindre fixe du vérin et qui est muni à sa seconde extrémité axiale de moyens pour sa fixation sur la fourchette d'embrayage.

Le cadre rectangulaire rigide présente donc une première extrémité axiale relativement peu large, puisque chevauchant uniquement la tige de piston, mais elle présente une seconde extrémité élargie pour le chevauchement du corps de cylindre d'encombrement important.

Dans le but de disposer un vérin d'encombrement réduit, l'invention propose un vérin du type vu précédemment caractérisé en ce que l'élément fixe est le piston, en ce que l'élément mobile est le corps de cylindre et en ce que le corps de cylindre comporte deux ailes qui s'étendent radialement vers l'extérieur et sur lesquelles sont accrochées les deux extrémités opposées d'un câble de traction qui est replié en forme de U au niveau de sa zone centrale autour d'un étrier relié à la fourchette.

Selon d'autres caractéristiques de l'invention :
- l'étrier est sensiblement plan et comporte une gorge périphérique en arc-de-cercle dans laquelle est engagée la partie centrale du câble de traction ;
- l'étrier et le câble de traction sont agencés dans un plan contenant l'axe du vérin et parallèle à l'axe d'articulation de la fourchette ;
- le piston comporte, à son extrémité axiale avant, un collet radial externe pour sa fixation sur le véhicule, ou sur le groupe motopropulseur de celui-ci ;
- le piston comporte une entrée d'alimentation en fluide de commande sous pression qui débouche à l'intérieur d'une chambre de commande du vérin délimitée par le corps et le piston.

D'autres caractéristiques et avantages de l'invention apparaîtront à la lecture de la description détaillée qui suit pour la compréhension de laquelle on se reportera aux dessins annexés dans lesquels :
- La figure 1 est une représentation schématique en perspective éclatée d'un vérin conforme aux enseignements de l'invention ;
- les figures 2 et 3 sont des vues schématiques en coupe axiale d'un tel vérin, représenté respectivement en position avancée et reculée du corps du cylindre par rapport au piston fixe.

Le vérin 10 représenté sur les figures comporte un piston cylindrique 12 et un corps de cylindre 14 qui peuvent coulisser l'un par rapport à l'autre selon leur axe commun X-X.

Conformément aux enseignements de l'invention, le piston 12 est relié à une structure fixe 16 du véhicule qui peut être un élément de la caisse ou un élément du groupe motopropulseur.

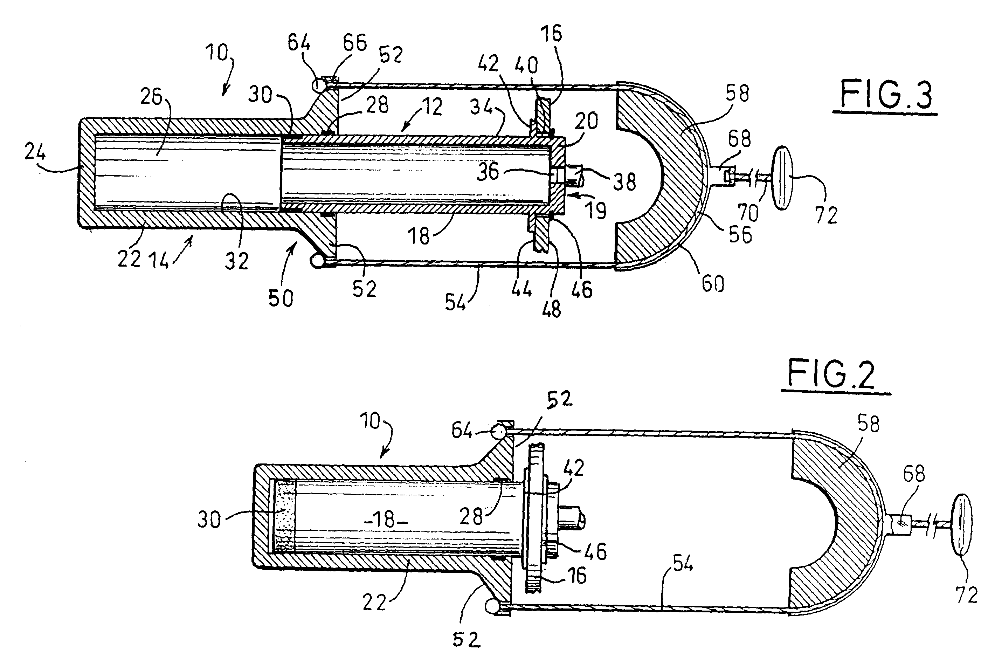

Comme on peut le voir plus particulièrement sur les figures 2 et 3, le piston 12 comporte une jupe annulaire cylindrique 18 qui est fermée à son extrémité axiale avant 19 par une paroi transversale 20 tandis que le corps de cylindre 14 comporte lui aussi une jupe annulaire cylindrique 22, de diamètre supérieur, qui est fermée à son extrémité axiale arrière par un fond transversal 24.

Le corps de cylindre 14 est susceptible de coulisser coaxialement le long du piston 12 sous l'effet d'une variation de pression à l'intérieur d'une chambre hydraulique de commande 26 délimitée à l'intérieur du piston 12 et du corps de cylindre 14. Toutes ces dispositions favorisent la simplicité du piston 12 et du corps de cylindre 14 aisément réalisables par moulage.

Des joints d'étanchéité 28, 30 sont agencés respectivement sur les surfaces cylindriques interne 32 du corps de cylindre 14 et externe 34 du piston 12 de manière à assurer de manière simple l'étanchéité de la chambre hydraulique 26.

La chambre hydraulique 26 possède une entrée d'alimentation 36 qui est agencée axialement dans la paroi transversale avant 20 du piston 12 et sur laquelle est branchée une canalisation d'alimentation 38 reliée à un circuit de distribution de fluide sous pression comportant usuellement un émetteur (non représenté).

Ainsi on tire parti de la paroi 20 ce qui permet de ne pas affecter la jupe 18.

Pour la fixation du vérin 10 sur l'élément de structure 16 du véhicule, l'extrémité axiale avant 19 du piston 12 est engagée au travers d'un orifice circulaire 40 aménagé dans l'élément de structure 16 du véhicule et il comporte sur sa surface cylindrique externe 34 un collet radial externe 42 qui forme une butée axiale en coopérant avec une face arrière 44 de l'élément de structure 16.

Un anneau élastique 46, tel qu'un circlips, est monté dans une gorge annulaire agencée sur l'extrémité axiale avant 19 du piston 12 et il coopère avec une face avant 48 de l'élément de structure 16. Bien entendu en variante le collet 42 peut être remplacé par un circlips engagé dans une gorge pratiquée dans la surface 34.

Le piston 16 est ainsi centré dans l'orifice 40 et il est fixé axialement par rapport à l'élément de structure 16 et ce de manière simple par mise en place de l'anneau 46 à la manière d'un clipsage.

Conformément aux enseignements de l'invention, le corps de cylindre 14 comporte à son extrémité axiale avant 50 deux ailes ou oreilles 52 diamétralement opposées, qui s'étendent radialement vers l'extérieur, et sur chacune desquelles est accrochée l'une des extrémités 62 d'un câble de traction 54 qui commande la fourchette d'embrayage articulée (non représentée).

La partie centrale 56 du câble de traction 54 est repliée en forme de U autour d'un étrier 58 qui est une plaque de forme générale annulaire et semi-circulaire.

Plus précisément, la partie centrale 56 du câble 54 est engagée dans une gorge radiale pratiquée dans le chant 60 de la périphérie cylindrique de l'étrier 58.

Les extrémités 62 d'accrochage du câble 54 sur les ailes 52 du corps de cylindre 14 sont munies d'olives 64 serties en bout de câble à la manière d'un frein de vélo.

Les extrémités 62 du câble de traction 54 sont engagées radialement dans des fentes radiales 66 pratiquées dans les oreilles 52 et les olives 64 viennent en butée à l'intérieur d'un logement de forme complémentaire agencé dans la face arrière des oreilles 52.

L'étrier 58 est par ailleurs muni de moyens de liaison avec la fourchette (non représentée) de l'embrayage qui sont agencés de manière à exercer un effort de traction selon l'axe X-X du vérin.

A cet effet, l'étrier 58 comporte un cavalier 68 qui chevauche la gorge annulaire agencée dans le chant 60 de l'étrier, dans l'axe X-X du vérin, de manière à laisser un passage pour le câble de traction 54.

Un second câble 70 est fixé par une de ses extrémités sur le cavalier 68 et porte à sa seconde extrémité une rondelle 72 d'accrochage sur la fourchette d'embrayage.

L'utilisation de l'étrier 58 permet avantageusement de répartir l'effort de traction sur les deux brins du câble de traction 54 de manière symétrique par rapport à l'axe X-X.

De préférence, l'étrier 58 et les deux oreillettes 52, et par conséquent le câble 54, sont agencés dans un plan contenant l'axe X-X du vérin 10 et parallèle à l'axe d'articulation de la fourchette.

En effet, la position du point d'accrochage du câble 70 sur la fourchette varie, par rapport à l'axe X-X, avec la rotation de la fourchette autour de son axe. Il est alors souhaitable que cette variation de position ne provoque pas un déséquilibre de traction entre les deux brins du câble 54 ce qui pourrait entraîner le coincement du vérin.

On appréciera la simplicité du vérin selon l'invention, son piston 12 pouvant être métallique, par exemple à base d'aluminium, tandis que son corps de cylindre 14 peut être en matière plastique renforcée. Bien entendu cela dépend de la pression régnant à l'intérieur de la chambre hydraulique.

En outre le câble 54 évite tout risque de coincement du corps de cylindre 14 animé d'un mouvement de translation, tandis que l'extrémité de la fourchette de débrayage coopérant avec la rondelle d'accrochage 72 effectue un mouvement en arc de cercle.

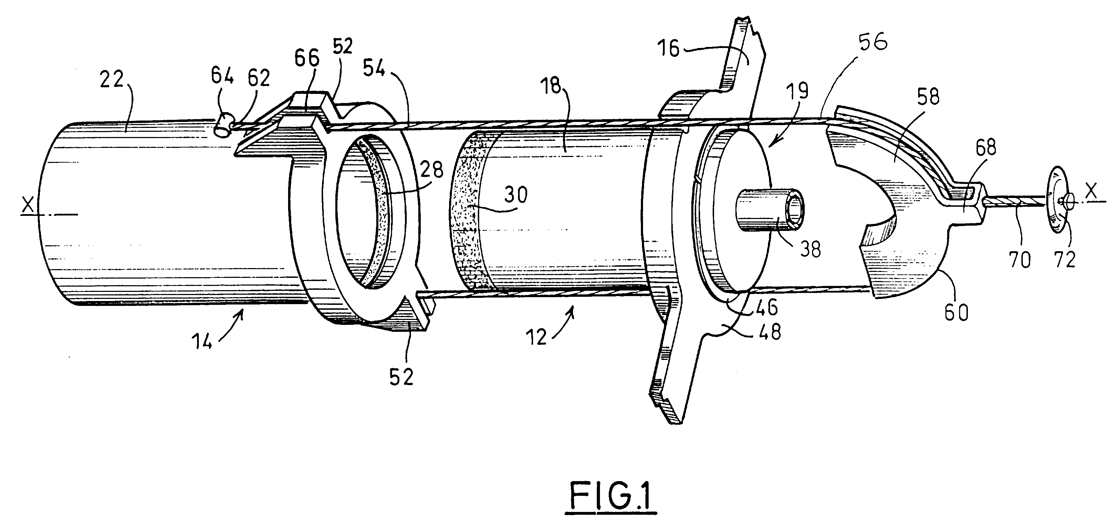

On appréciera (figure 1) que l'élément de structure 16 guide le câble 54 en étant doté de rainures de guidage (non référencées) à cet effet. Bien entendu on peut monter un ressort à boudin dans la chambre 26 pour exercer une précharge sur la fourchette de débrayage. Bien entendu le corps de cylindre 14 peut être en deux parties avec une partie rapportée comportant le joint 28.

## Revendications

1. Vérin hydraulique de commande d'un embrayage de véhicule automobile destiné à agir sur une fourchette articulée d'embrayage par l'intermédiaire d'un organe de traction (54), du type dans lequel le vérin (10) comporte un élément fixe (12) relié au châssis (16) du véhicule, ou au groupe motopropulseur de celui-ci, et un élément mobile (14) auquel est relié l'organe de traction (54), et du type dans lequel l'élément mobile (14) et la fourchette sont agencés axialement respectivement en arrière et en avant de l'élément fixe (12), le vérin étant du type comportant un corps de cylindre (14) et un piston (12) susceptibles de coulisser l'un par rapport à l'autre selon leur axe commun (X-X), caractérisé en ce que l'élément fixe est le piston (12), en ce que l'élément mobile est le corps de cylindre (14) et en ce que le corps de cylindre (14) comporte deux ailes (52) qui s'étendent radialement vers l'extérieur et sur lesquelles sont accrochées les deux extrémités opposées (62) d'un câble de traction (54) qui est replié en forme de U au niveau de sa zone centrale (56) autour d'un étrier (58) relié à la fourchette.

2. Vérin selon la revendication 1, caractérisé en ce que l'étrier (58) est sensiblement plan et comporte une gorge périphérique en arc-de-cercle dans laquelle est engagée la partie centrale (56) du câble de traction (54).

3. Vérin selon l'une des revendications 1 ou 2, caractérisé en ce que l'étrier (58) et le câble de traction (54) sont agencés dans un plan contenant l'axe X-X du vérin (10) et parallèle à l'axe d'articulation de la fourchette.

4. Vérin selon l'une quelconques des revendications précédentes, caractérisé en ce que le piston (12) comporte, à son extrémité axiale avant (19), un collet radial externe (42) pour sa fixation sur le véhicule, ou sur le groupe motopropulseur.

5. Vérin selon l'une quelconque des revendications précédentes, caractérisé en ce que le piston (12) comporte une entrée d'alimentation (36) en fluide de commande sous pression qui débouche à l'intérieur d'une chambre de commande du vérin (10) délimitée par le corps (14) et le piston (12).

6. Vérin selon l'une quelconque des revendications 1 à 3, caractérisé en ce que les extrémités (62) du câble de traction (54) sont engagées radialement dans des fentes radiales (66) pratiquées dans les ailes (52).

7. Vérin selon la revendication 6, caractérisé en ce que les extrémités (62) d'accrochage du câble de traction (54) sont munies d'olives (64) venant en butée à l'intérieur d'un logement de forme complémentaire agencé dans la face arrière des oreilles (52).

8. Vérin selon la revendication 2, caractérisé en ce que l'étrier (58) comporte un cavalier (68) qui chevauche la gorge de l'étrier pour liaison de l'étrier avec la fourchette.
